# EUROPEAN PATENT APPLICATION

(11) **EP 2 442 134 A1**
(43) Date of publication of application: **18.04.2012**
(21) Application number: 11183639.1
(22) Date of filing: 30.09.2011
(51) Int. Cl.: G01S 17/89, G06T 17/00

(54) **Image acquisition unit, acquisition method, and associated control unit**

(30) Priority: 01.10.2010 US 388826 P
(71) Applicant: Wee, Jay Young, Woodbury, NY 17797 (US)
(72) Inventor: Wee, Jay Young, Woodbury, NY 17797 (US)
(74) Representative: Mooij, Maarten

(57) **Abstract**

Video arrayed data acquired via at least one video camera, can be co-registered with lidar arrayed data acquired from a lidar receiver data into a combined arrayed data. The co-registration and data acquisition can be done within a common housing having an combined arrayed data output which can be connected to a control module. The control module can have a video signal acquirer, a video processor for processing the acquired video signal, a threat analyzer capable of detecting a threat from the processed video signal or from another source, and a memory storage device.

## Description

### FIELD

The improvements generally relate to the field of artificial vision systems for automotive vehicles, and more specifically relates to acquisition and data storage features in relation with threat detection.

### BACKGROUND

Artificial vision systems had been known for several years, yet suffered from limitations which impedes their use in automotive applications. There thus remained unaddressed needs relating to the adaptation of artificial vision systems to the field of automotive vehicle.

### SUMMARY

This application describes the combined use of video data obtained from a video camera and range or depth data obtained from a lidar. Each of these two sources has individual limitations and their combined use can provide complementary information. For instance, the resolution of some readily available lidar is poor compared to the resolution of some readily available video cameras, and typically does not recognize colors of objects such as lane markings, road signs and signal lights, for instance. On the other hand, for instance, the signal from a video camera typically has the limitation of not being able to directly measure the distance of objects captured in front of the camera, has a reliability which is dependent on lighting and weather conditions such as nighttimes, fog, smoke, rain, snow, direct sunlight and direct headlight from oncoming traffic, and typically has an exposure adjustment delay for changing lighting conditions such as when entering a tunnel. The use of one signal can thus complete the information obtained from the other or at least provide a useful redundancy thereto. For instance, the lidar signal can return depth information which can be analyzed to determine the position of roadway curbs or barriers in conditions where lane marking information cannot be readily obtained from a video camera, such as when lane marking are worn or covered. Hence, using both signals can allow using roadway curb information in addition to or instead of lane marking information to assist in providing useful vehicle position information. Further, providing an image acquisition unit which has a pre co-registered video and lidar data signal can be a highly practical video source from a control module perspective. Possible applications include lane departure warning system, smart cruise control system, object and pedestrian detection systems, sign and signal light recognition night time driving and adverse weather driving assistance.

In accordance with one aspect, there is provided an automotive vehicle artificial vision system which analyses video data both from a color video source and from a lidar source in order to assist in driving the vehicle; wherein the data from the color video source and the lidar source is combined in a primary stage of data acquisition and received in a combined form in a secondary stage of data analysis.

In accordance with one aspect, there is provided an image acquisition unit comprising: a housing, a video camera system including at least one video camera and a video output for video arrayed data acquired via the at least one video camera, a lidar system including at least one lidar emitter and a lidar receiver, and a lidar output for lidar arrayed data acquired from the lidar receiver, a fusion integrator connected to both the video output and the lidar output for receiving both the video arrayed data and the lidar arrayed data, the fusion integrator having a co-registering function to co-register the video arrayed data and the lidar arrayed data into a combined arrayed data, and an output for the combined arrayed data leading out of the housing.

In accordance with another aspect, there is provided a method comprising : acquiring video arrayed data from at least one video camera; acquiring lidar arrayed data from the reflected lidar signal received; and co-registering the video arrayed data with the lidar arrayed data into a combined arrayed data signal.

In accordance with another aspect, there is provided a control unit comprising a video signal acquirer, a video processor for processing the acquired video signal, a threat analyzer capable of detecting a threat from the processed video signal or from another source, and memory storage device.

In accordance with another aspect, there is provided an image acquisition unit comprising a video image acquisition system and a lidar image acquisition system all in the same compact one self contained housing. The video image and the lidar image can be combined inside the self contained housing.

Many further features and combinations thereof concerning the present improvements will appear to those skilled in the art following a reading of the instant disclosure.

### DESCRIPTION OF THE FIGURES

In the figures,

Figs. 1 and 2 are schematic views of a first example of an image acquisition unit;

Fig. 3 is a schematic view showing cropping;

Fig. 4 is a schematic view illustrating an example of co-registration;

Figs. 5 shows another example of an image acquisition unit;

Fig. 6 shows another example of an image acquisition unit;

Fig. 7 is a bloc diagram of an image acquisition unit in combination with control modules;

Figs. 8 and 9 are examples of signals; and

Fig. 10 is a schematic showing laser diffusion.

### DETAILED DESCRIPTION

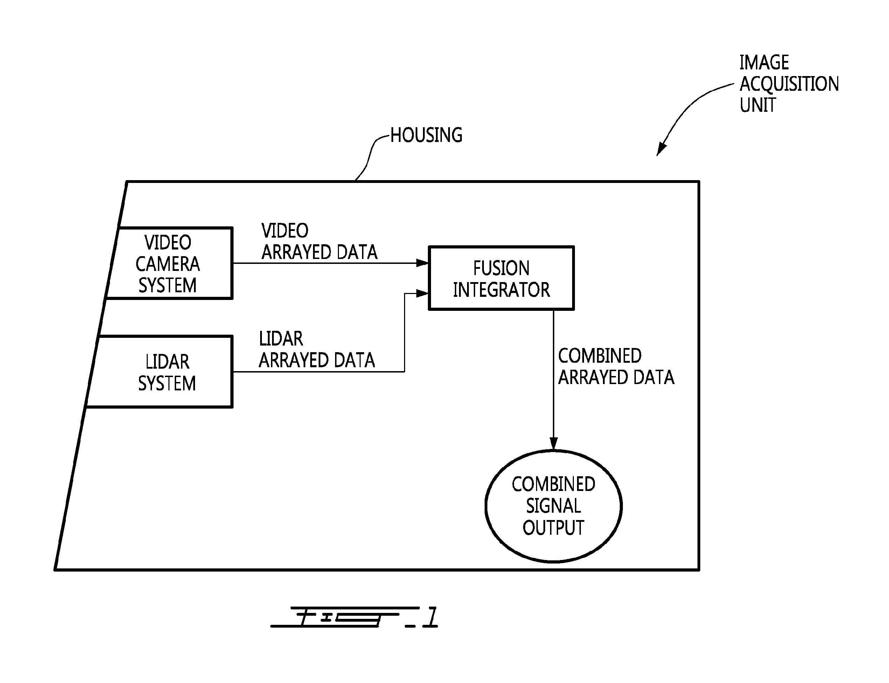

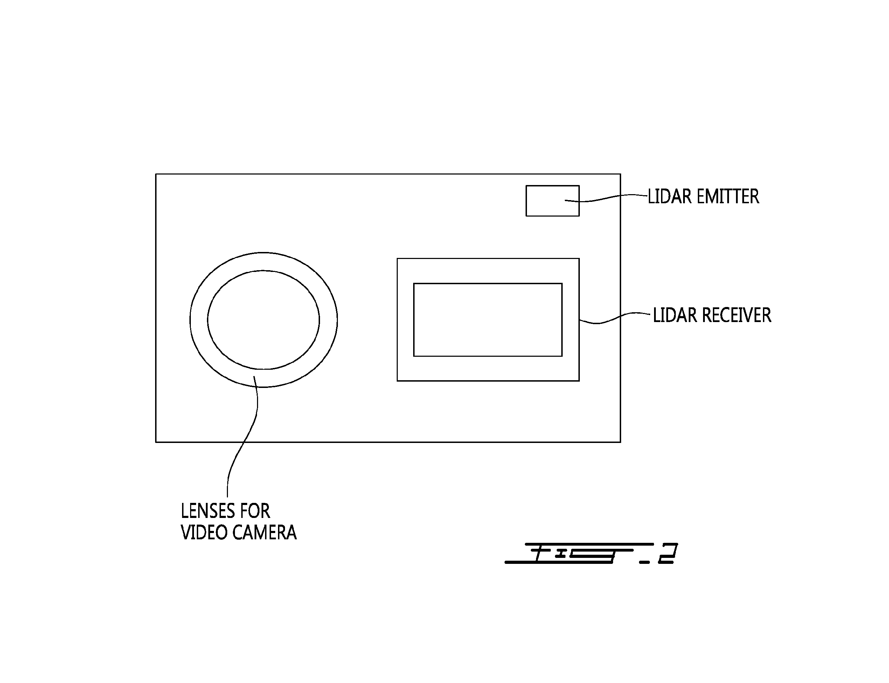

Fig. 1 shows an example of an image acquisition unit which incorporates both a video camera system and a lidar system. In this example, the image acquisition unit is provided as a stand alone unit housed in a single housing, and having a fusion integrator which co-registers the video arrayed data and the lidar arrayed data into a combined arrayed data signal. The image acquisition unit has a combined signal output to make the combined arrayed data signal accessible outside the housing. The video camera system, the lidar system, and the fusion integrator may be mounted in the housing. Fig. 2 shows a front view of the image acquisition unit of Fig. 1. The front face can include a lidar emitter, a lidar receiver, and video camera lenses for instance.

In this particular example, the housing can be sized to fit the limited area available between a rear-view mirror and a windshield of an automotive vehicle. This can be achieved with limited overall dimensions and a slanted front face adapted to the sloping angle of the windshield.

The combination of the LIDAR and video data can be considered take place in a first stage referred to herein as the primary stage, such as within the image acquisition housing for instance, by comparison with the combined data analysis which can take place in a secondary stage, such as by control modules which can optionally be regrouped inside a unitary control unit for instance.

The video camera system can vary depending on the specific application and can be a CMOS or CCD camera for instance (such as WXHA ( 1280 X 800 ) High Dynamic Range and High Definition Image Sensor from OmniVision or a Micron Mobileye CMOS camera for instance). The video camera system will typically provide an output of video arrayed data in the form of a 2D array of a given number of video pixels, where each video pixel has red (R), green (G) and blue (B) associated data.

The lidar system can also vary depending on the specific application. It can be of the 3D flash LIDAR type if desired (of which ASC is a supplier) and can have an emitter based on an eye and skin-safe 1530∼ 1570nm laser diode (such as Model number CVLM57 manufactured by M/A-Com, Edison , New Jersey, for instance), for instance, with a receiver based on an InGaAs detector such as a 128 x 128 APD InGaAs detector (from Advanced Scientific Concepts) or similar or a large array InGaAs APD type laser range finder receiver such as model number 7500 manufactured by Analog Modules Inc, Longwood, Florida or again model C30659 from PerkinElmer Optoelectronics for instance), in which case it can provide a data signal in the form of a 2D array of a given number of lidar pixels. Typically, each lidar pixel will have a depth (D) data associated with it, and optionally an intensity (I) data as well. LIDAR can measure the distance of objects and vehicles in front with a relatively high degree of precision. The distance can be measured specifically for smart cruise control applications. In automotive applications, a distance measurement from 1 meter to 150 meters or to 200 meters, for example, can be satisfactory for instance.

In some LIDAR applications such as Flash LIDAR, the emitter side optical lenses use diffusers and / or filters as part of the optical path. Filters may also be used on the receiver optical path. Diffusers are a type of diffractive optic that can take a laser beam and redistribute the light into virtually any pattern desired in order to accommodate and concentrate the laser output to certain shapes and on the receiver side of diffuser should have the same shape on the receiver side of optical lenses. Diffusion with light shaping diffusers can extend the Field of View. Direction turning films can combine the diffusion and angular distribution characteristics of light shaping diffusers with a Fresnel/prism beam shifting structure. These light bending films enable off-axis placement of an incoming beam when direct line of site is impractical. Applications include LED lighting, aviation displays, traffic signs, displays and LCD backlights for instance. They can also be used to change the light beam direction to light a wall, walkway or other lighting target. Diffusers are typically available as simple 20° direction turning films, or combined with any Light Shaping Diffuser angles. Custom variations are available. Optical filters, such and "band-pass" filters, attenuation or polarizing filters may be used to ensure the initial rejection of unwanted signal and minimize unwanted noise at the receiver end.

A 3D flash LIDAR can measure distance by calculating the time of flight. (The period of time between laser emission and the reflection of the laser from the object to receiver optical lens.) An example of a conventional laser rangefinder application is the receiver module 7500 SERIES manufactured by Analog Module Inc, which is used in military laser range finder applications. Flash LIDAR can range from 1 meter to 1 Km or more with great accuracy while recognizing up to 255 targets, i.e. measure up to 255 different parameter measurements of objects in front of the camera in eye safe and skin safe 1530-1550 nm wave length. The laser applications can make delicate and accurate distance measurements and can also be used to identify the edges and curves of roads by recognizing the difference in height between roads and curbs. The histogram computation of lane markings can be identified by measuring the intensity of the markings. This is very instrumental in keeping the automobile within the left and right side of the lane markings in order to keep it centered on the road. Laser can also accurately range and gauge the curbs by measuring the height difference between the road and curb. This valuable information can be translated into your vehicle's location and position in relation to the road.

When lane marking is not visible or is very poor, curb measurement is very instrumental to realize where the vehicle is relatively positioned, and keeping the vehicle safely positioned on the road. This will be a reference position in relation to the vehicle's position on the road. Also when the visibility of lane markings are poor and/or erased, the video camera and/or lane marking intensity readings via laser can become very difficult if not impossible to work. The laser can also measure the intensity of lane markings, using Histogram to identify the lane markings on the road.

The conventional video image of objects and cars in front of camera super imposed with laser range finder capability can improve lane marking recognition capability.

In many cases, the video camera system will have a much greater resolution than the lidar system, a different field of view, and possibly also different optical receiving properties, which prevents the direct matching of video camera pixels with lidar pixels.

The fusion integrator can match the RGB color data of the pixels from the video camera system with depth (D) and optionally also intensity (I) data of corresponding pixel of the lidar system to obtain a 2D array of pixels having RGBD information in a process referred to as co-registration.

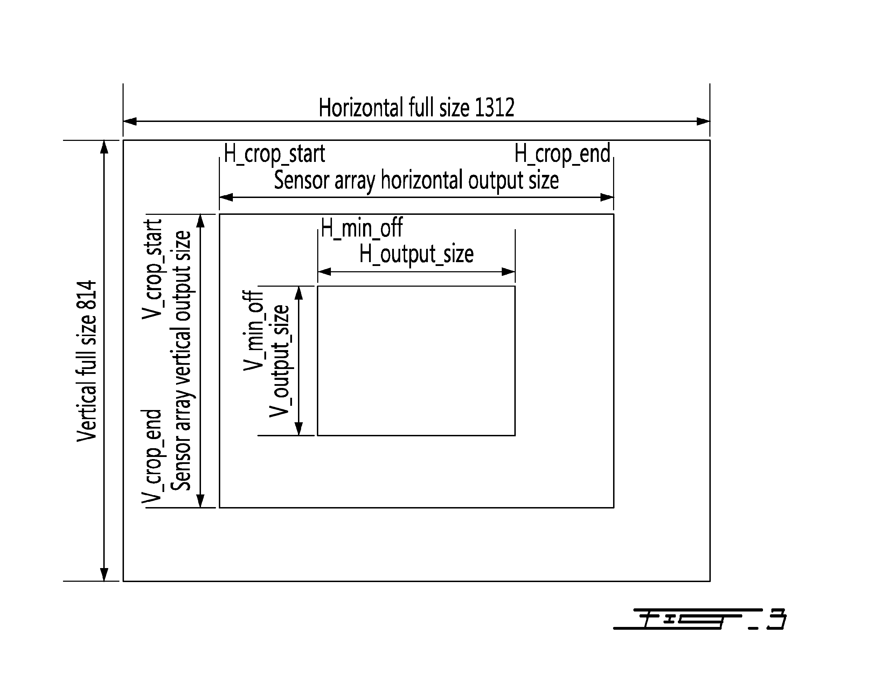

Care will thus be taken to scale and/or crop the aspect ratio of the video data and lidar data adequately to coincide without losing the support of horizontal and vertical cropping. Fig. 3 schematizes cropping of the images.

Once suitable scaling, cropping, and possible further deformation to accommodate for difference in receiver optics has taken place, each lidar pixel can be associated with a "zone" of video pixels which can include more than one video pixel.

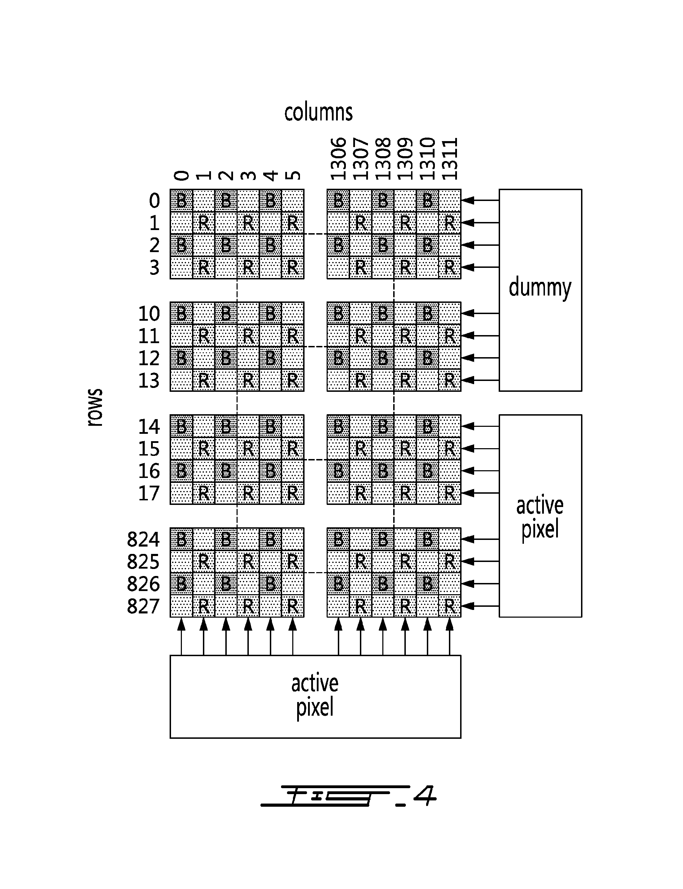

More broadly, the co-registration typically requires associating a depth or range value depending on the value of a particular lidar pixel with each video pixel. One way to achieve this is simply by matching the data value of a given lidar pixel with all the video pixels associated with it, i.e. within the associated zone. In some applications without nonlinear optical deformation, this can be done simply by matching the pixel array structures by rows and columns as schematized in Fig. 4. There are however other ways which can be better adapted for some applications. For instance, instead of simply associating a given lidar pixel data with the video data of all the video pixels in the zone, it can be preferable to interpolate otherwise absent lidar data, instead of directly filling in, by calculating a linearly fading value for each intermediate video pixel location between adjacent lidar pixels and associate a calculated, averaged and/or approximated lidar pixel value to the intermediate video pixels.

In any event, it is likely that initial calibration will be required to evaluate the exactness of the match made by the co-registration. This burden can be reduced by securely positioning the optics of the lidar and video systems on a common frame and as part of a common housing. Henceforth, vibration and the like will likely be suffered collectively by the video system and lidar system and affect the co-registration to a lesser extent than if the video camera and lidar optics were provided on separate components of the automotive vehicle.

In one embodiment, the frames can be merged into a single continuous video output at a rate in the order of 30 frames per second (fps) for instance.

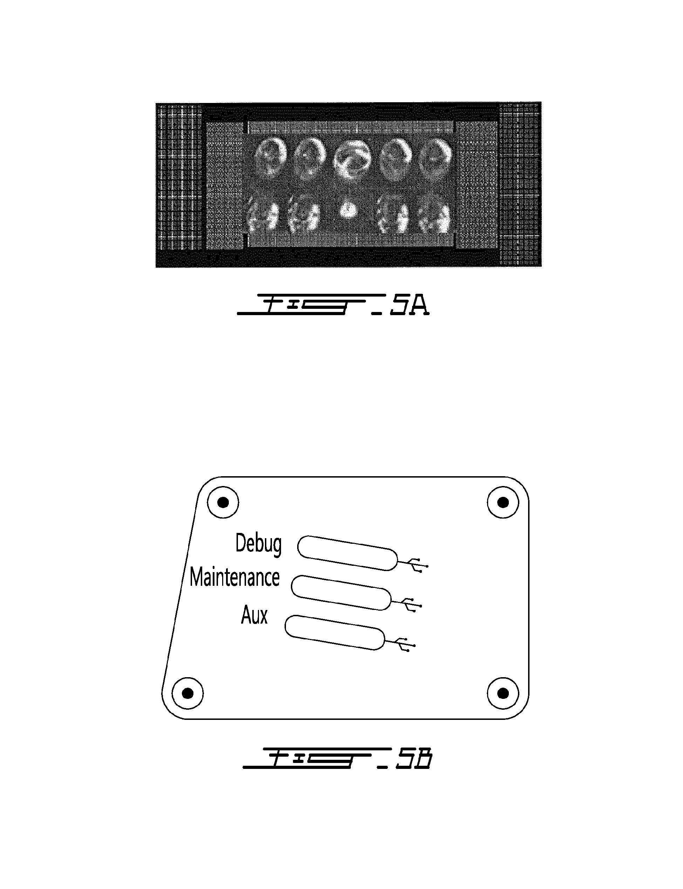

Turning now to Figs. 5A and 5B, an other example of an image acquisition unit is shown in front view and side view, respectively. The dimensions can be of 3 to 6 inches for instance. The image acquisition unit can be installed between the windshield and the rear view mirror of a vehicle. The unit's housing in this example is made out of a lightweight; temperature tampered plastic materials which contains two separate windows for the receiving optical lenses and one window for laser output. The front of the housing is slanted to perfectly fit the curved windshield and is surrounded by rubber bumper gasket that can be less than ¾ inches thick with breathing holes to provide air ventilation and eliminate possible dew build up in the windshield and optical lens. It also reduces the impact of shock and vibration to the camera. This also assists the integrity of camera alignment and can be designed to look forward to see a total field of view of more than 25 degrees (from the driver's perspective).

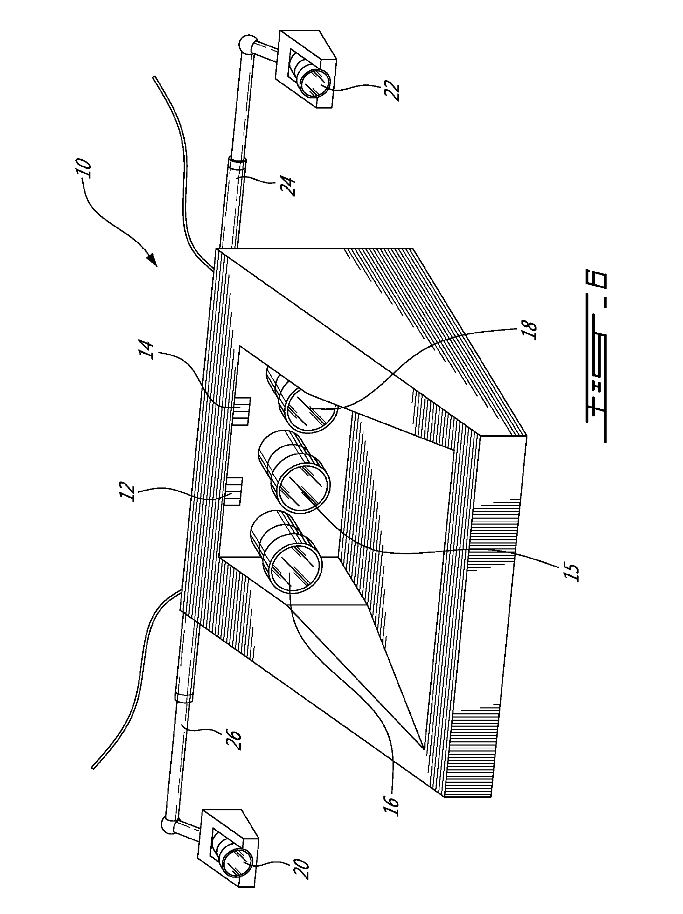

Turning now to Fig. 6, another example of an image acquisition unit 10 is shown. In this example, the image acquisition unit 10 is equipped with a LIDAR system having an laser emitter 12, and further having a back-up emitter 14 which can help improve the overall value by reducing maintenance costs. Both emitters 12, 14 can be coupled to the same receiver 15, for instance. Further, this example uses more than one video camera, and more precisely four video cameras including two wide-angle cameras 16, 18 and two telephoto/zoom cameras 20, 22. In such an embodiment, some or all of the cameras can be made to be orientable, particularly the telephoto/zoom cameras 20, 22, in order to enable zooming to a specific feature caught by the wide angle cameras 16, 18 for instance. Further, one or more video cameras may be made movable. For example, the one or more cameras may be mounted or otherwise positioned on extendible arms 24, 26 as shown, and may be movable by extension of the extendible arms 24, 26.

In the embodiments described above, the image acquisition unit can supply a 3D signal having color and depth arrayed data to a control module which will have the functions required to analyze the data and intervene as predetermined. The control module can be provided as part of the vehicle's CPU, or as an other unit, for instance, and the image acquisition unit can provide a co-registered lidar and video signal (combined signal) as one of potentially more inputs for the control module. The merged data provided by the image acquisition unit thus becomes a useful and powerful tool for the control module to implement algorithms for driver safety assistance program.

The control module can include driving safety assistance programs such as : lane departure warning system, various driver assistance programs e.g., for night time driving, adverse weather driving conditions such as fog, direct sunlight and oncoming headlights, and smart cruise control systems (which can for instance contribute to maintain a predetermined safety distance between your car to other vehicles in front of you.) It can be made to alert the driver in many different means such as make audio sound warning for danger or visible light warning for danger or even vibrate your wheel or seat to alert the danger to the driver during a potential collision event. It can be made to make self diagnostic determinations and interventions such as slowing down the vehicle without the driver's intervention. This system can also enforce a number of predetermined safety parameter requirements and under predetermined conditions, automatically override and manoeuvre the vehicle itself via CAN BUS communication protocol. This emergency safety measure may be necessary to avoid a possible collision with another vehicle or pedestrian. It can also stop the vehicle to avoid possible collision, as well as turn and manoeuvre the vehicle to the right or to the left to avoid an accident.

Since the operating system can search and correlate with the data base library of objects and instantly verify the object detected by comparing the images already embedded in data base library and the actual images captured by either CMOS or laser component, it is capable distinguishing and identifying different objects, such as pedestrians, lane markings, and cars, etc.... Rather than the typical audio sound warning such as "beep, beep, beep", the system can provide voice warnings of specific objects such as the following: "Warning Bicyclist in close proximity on the right/left"; "Warning you are drifting towards the right/left lane"; "Warning there is a pedestrian up ahead"; "Warning you are too close to the car on the left/ right lane"... In the event the operating system cannot distinguish and identify the object, it would instead provide a default warning such as: "Warning object too close on the right/left/up ahead". With additional components interfaced, it can even alert the driver through vibrations of the steering wheel or seat. This acts as a secondary safety alert mechanism in case the driver is listening to loud music or has fallen asleep behind the wheel.

Using an image acquisition unit as described above can make a combined signal available to the control module which can thus accurately measure distance of object(s) in front of camera (1 meter to 150, 200 meters, or farther), uses gate mode and calculates time of flight to see through fog, smoke, heavy rain, or snow; can be used for night vision; e.g., at night and inside of tunnel; See through direct sun light and head lights; measures "z" depth to give 3 dimensional point cloud images as well as a birds-eye point of view; enable high quality real time video images with a realistic 3 dimensional point cloud, images that gives accurate in-depth distance readings and can accurately detect the depth of an object and their identity and can differentiate and classify different vehicles on the road; allow signal light (RGB) and sign recognitions; allow determination of differently colored lane markings; and output high quality real time video images that the driver can potentially utilize to increase his or her awareness of surroundings.

The following are examples of applications for a control module using the combined signal with algorithms and software:

LANE DEPARTURE WARNING SYSTEM: detecting and following lane markings and help center the vehicle within left and right lane markings in front of the vehicle and provides a warning if the driver unintentionally drives over the lane markings to the left or to the right. The video camera monitors the front of a vehicle with lane marking recognition and guides the driver to drive within a designated area namely within lane divider markings and if the vehicle crosses over the lane marking without giving a left or right turn signal, the software is then programmed to detect and warn the driver for possible careless driving behavior or accidentally moving towards a different lane that may create driving hazards for others as well. While monitoring driving patterns, this system monitors for any possible violation of safety zone monitoring parameters via its CMOS camera video images. If the vehicle is moving towards or going over the lane marking without an adequate left or right turn signal, the software alerts the driver immediately.

SMART CRUISE CONTROL SYSTEM: In the event the driver exceeds the recommended safety distance from the vehicles in front of your car, the system gives you a level of warning according to predetermined warning criteria such as making an audio or visual alert warning and even enabling an automatic braking system if safety zone distance is violated that can lead to an accident.

OBJECT AND PEDESTRIAN DETECTION SYSTEMS: detecting whether the object is a pedestrian, vehicle, pole, or any other object it is programmed to recognize.

SIGN AND SIGNAL LIGHT RECOGNITION: recognizing stop signs, whether the signal light is green or red, and give the proper alert when needed.

NIGHT TIME DRIVING & ADVERSE WEATHER DRIVING ASSISTANCE: penetrate through fog, smoke, heavy rain, and snow and its detection system is not affected by bright, oncoming headlights.

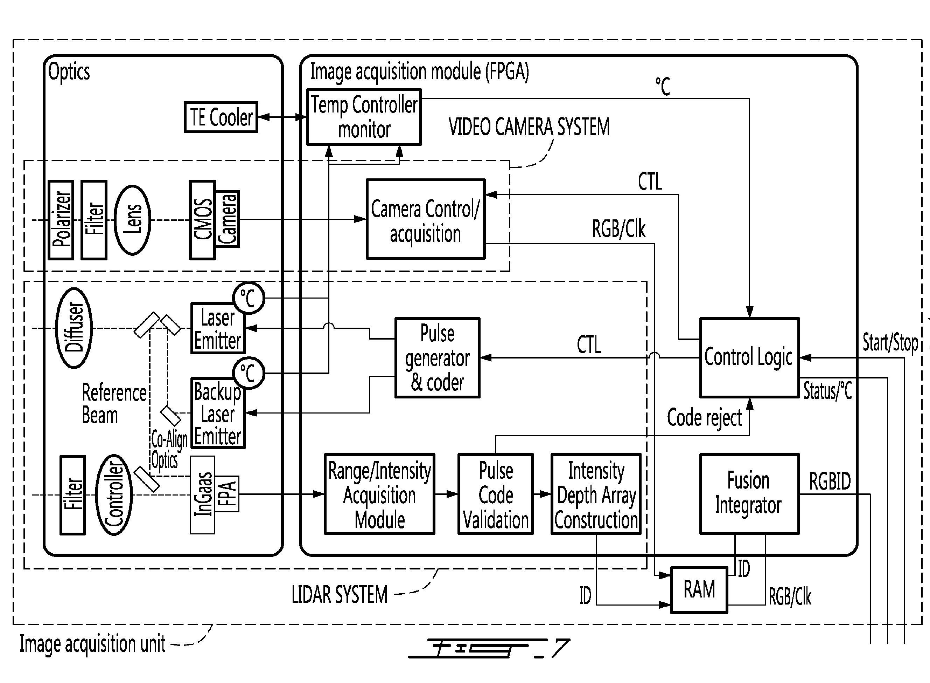

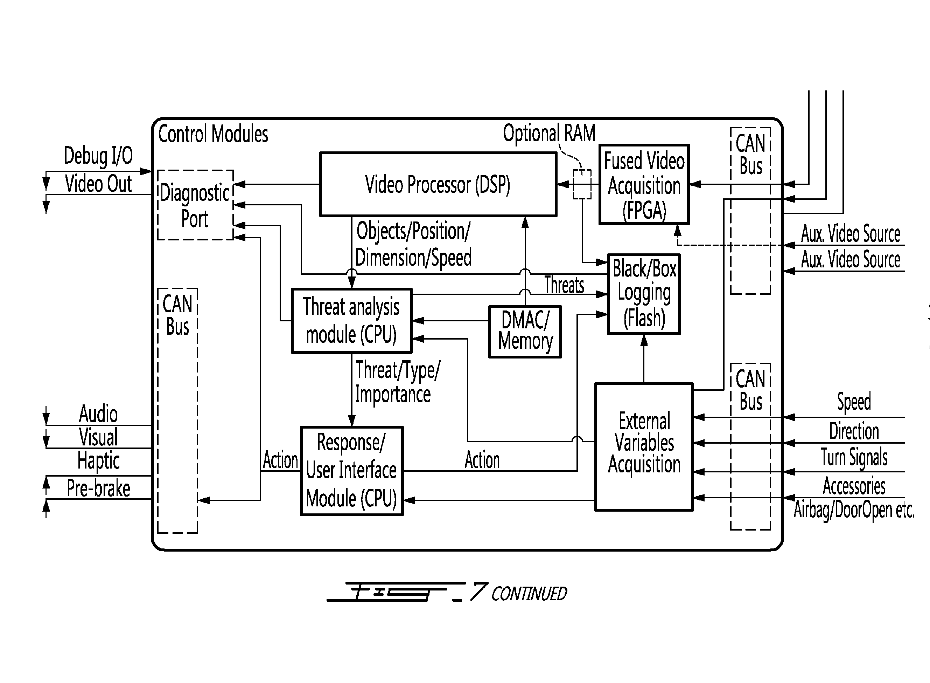

Turning now to Fig. 7, an other example of an image acquisition unit which can be used as one of potentially more inputs of a control module is shown.

The image acquisition unit can be seen to have an optics module of the system acquires information using two independent imaging systems : a video camera system and a lidar system. A Peltier-Effect Cooler (TE-Cooler) system is also included in this particular embodiment to assist in providing suitable operating temperatures for the components.

The video camera system here is comprised of one, or more, CMOS -Based camera and of the appropriate lenses to provide aperture and field of view required by the camera. In a low-end implementation of the system, a single, wide-field of view camera may be used, whereas in more sophisticated implementations a single telephoto lens would cover the direct front of the camera with high precision, while two more wide-angle cameras could provide lateral view at lower resolution, for instance. Each camera can have a polarizing lens and may have additional filters(such as UV filters for instance).

The light imaging radar (LIDAR) system is based on the emission of laser pulses and the calculation of time of flight of the reflected beams back to a detector system. In this implementation, a 1550nm eye-safe source is used as a source. A laser source is preferred because of the very precise frequency characteristics of the output.

The source can be pulsed in short bursts. The "pulse" can be modulated by an external source in this case by a pulse generator, in a pattern, which will be "recognisable" by the LIDAR imaging subsystems described in the Image Acquisition Module section. In this embodiment, the output beam can be diffused by a proper lens, in a way to cover an area of interest with a single pulse as opposed to scanning lasers for instance. An optical "splitter" can be used to transmit a portion of the output beam to the detectors. A second laser emitter can be installed in the system as a "backup" device. The use of a backup device can extend the lifespan of the LIDAR subsystem and thereby reduce service interventions. On a POWER-ON Self Test (POST), the image acquisition module can determine a main emitter failure, and be programmed to use the second emitter instead. In order to achieve this, both emitter output beams can be co-aligned with proper optics.

The detector is, in the preferred implementation, a Focal Plane Array (FPA) InGaAs detector, sensitive to the emitter's frequency. The resolution of the FPA can be adapted to the specific application. In a way similar to other cameras, appropriate optics should be in place to focus the reflected beams to the FPA's plane. Optical filters can be used to reduce incoming noise from non-significant frequencies.

As described above the FPA receives directly (on part if the array) a portion of the emitter signal. This emitter signal is used to trigger counters or an integration mechanism, identifying the "zero time" of the emitted pulse. From this reference, for each detector in the array, the time of flight of reflected pulses can be calculated using circuitry described below.

The image acquisition module can thus contains all the control logic for the optics section as well as all the integration mechanisms required to output a RGB image fused in a single stream with Depth and Infrared Intensity information at the RGB pixel level (referred in the document as RGBID image or image stream). The image acquisition module further contains the control and acquisition logic required to interface the CMOS Camera and a subsystem used to control the LIDAR emitters. A subsystem, comprised of multiple units, is used to acquire and interpret the LIDAR's FPA array input.

The CMOS camera images and LIDAR Images can be stored in memory, and a subsystem be responsible for the integration of the RGB, Depth(D), and optionally Intensity(I) data in a coherent RGBID array.

A temperature control monitor can be used to acquire temperature information from the laser emitters (such as by using thermistors), and to control the TE Cooler Subsystem and ensure pre-set temperature of the laser emitters housing.

A communication and control logic subsystem can be used to interface with the back-end and exterior subsystems, as well as to provide the control logic for all subsystems in the image acquisition module.

The camera control-acquisition subsystem can acquire video data to RAM and control the CMOS camera parameters (such as gain and sensitivity), according to the parameters set by the Control Subsystem. The subsystem can use a double-buffering technique to ensure that an entire frame will always be able for processing by the fusion processor.

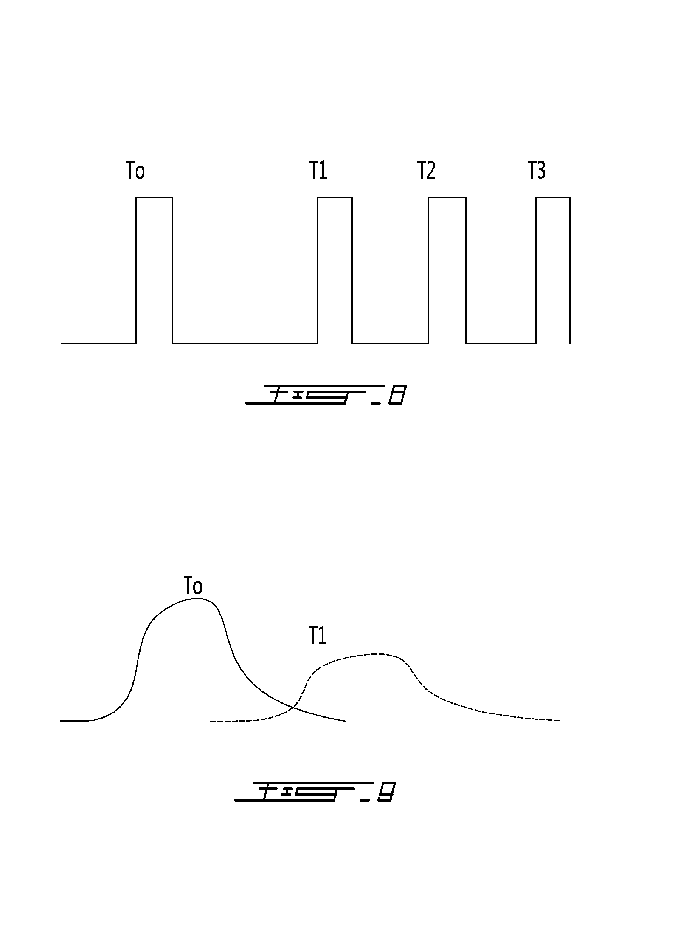

The pulse generator/coder subsystem will control the emitter to generate coded "patterns" of pulses, each pattern being composed of a number of pulses separated by predefined time intervals. An example of a pattern is shown in Fig. 8. Based on the maximal pulse repetition frequency of the laser , the patterns of pulses can be designed as binary sequences (pulse on/pulse off). The following characteristics were found satisfactory for the specific application : a minimum of 15 patterns per seconds ("pps"); a minimum of 1024 (or more) different patterns could be selected from; and the time between each pulse in a pattern is sufficient to integrate returns from the reflected beams located at 200m or more. The use of pulse patterns in combination with a pulse code validation subsystem can allow to discriminate the emitted patterns from other infrared emitters in the surroundings. The pattern can be programmable and randomly modifiable at the control module level, when conflicts are detected.

The lidar acquisition system can thus implement a 3 stage process to acquire the FPA data and transform it in an intensity-depth array that will be stored to RAM.

Referring to Fig. 9, a first step can be to acquire, for each of the FPA "pixels", the analog signal received from the photodetectors. The signal will exhibit a first increase in intensity of reception of the original emitted signal (T0) . If a reflection is returned, the signal will exhibit a second increase of intensity corresponding to the return beam. The time between both stimulations corresponds to the "time of flight". The intensity of the first reflected signal can also be stored as a significant information. Using circuitry well know to those versed in the art, for each "pixel", the time of flight and intensity of the first return can be acquired by the "Range/Intensity Acquisition Module" and stored, for a certain number of pulses ("N"), superior to the number of "bits" of the binary sequence of a "pattern". Given the 2 dimensional array corresponding to the FPA resolution, the resulting data will be two N x FPA_Vertical x FPA_Horizontal arrays, one for depth and one for intensity.

At this level, the acquired data is analysed to ensure correlation with the programmed "pattern of pulses". If the pattern is not recognized with a certain probability, data is rejected and the control module is notified. After a number of sequential rejections, the control module can change the emission pattern.

The final stage of the lidar acquisition can be the assembly in a single FPA_Vertical x FPA_Horizontal array of (Intensity, Depth) points, which will be stored in RAM, using a double-buffering technique. The integration of all of the information in the Nth dimension into a single "pixel" depth and intensity value can require some processing. Simple averaging of values can be sufficient in some embodiments.

The fusion integrator module is used to integrate, in a single array or RGBID points, the RGB data from the camera and the ID data from the LIDAR.

The resolution, field of view and alignment of both imaging sources will not be identical. Those parameters will be determined during a calibration procedure and can optionally be stored to a parameter flash storage.

A co-registration algorithm will tag each RGB pixel with a likely depth value (D) and optionally with an intensity value (I).

The resulting RGB(I)D image is stored for further streaming by the Control Logic module.

The control logic module inputs external commands to start /stop and adjust parameters for the video acquisition.

It outputs status information, as well as the output RGBID data (on the CAN Bus, not displayed) for consumption by external modules.

The control logic module can also be responsible for supplying parameters and control commands to all of the subsystems in the image acquisition module.

The control module (optionally provided in the form of a unitary control unit which can optionally be embedded within the vehicle CPU) can be responsible for the interpretation of the acquired imaging data and the provision of an appropriate response to the available subsystems in the vehicle.

To perform this task, the control modules can acquire vehicle status information from external systems, such as turn lights, direction, speed, etc. The control modules can also continuously store, on a "rolling basis", a number of such acquired parameters and pertinent imaging data and interpretation to a flash memory module, which can be used as a "black box", in case of an incident.

The interpretation and response can be a three stage subsystem, described in the "Video Processor", "Threat analysis module", and "Response / User Interface Module", below.

The Video Processor /Fused Image Acquisition can acquire RGBID imaging data from the image acquisition module, and optionally, acquires RGB imaging data from auxiliary cameras. The video processor can then extract features from the imaging data, to provide, as output, the following information, for each of the features identified: Identify feature dimensions and position in image (blob); compute feature position and trajectory; and classify feature (type: i.e. Bike, Pedestrian, sign), when possible. To perform this task, as input, the Video Processor can also have vehicle speed and direction information, which can be obtained from the external variables acquisition module for instance.

The resulting information can then be passed to the threat analysis module for further processing.

The threat analysis module can use the data provided by the Video Processor module, the threat analysis module can perform an assessment of a danger level and information level that can be determined for each object. Object dimension, trajectory and position information can be used, for instance, to assess the probability of collision. Identified signs and road markings can also be evaluated to determine their pertinence in the context of the driver assistance modes that will be programmed. The information and identified threats can be provided to the response/user interface module.

The response/user interface module can input the threat and information features, and use all other external variables, to determine the actions that need to be taken to mitigate threat and inform the driver. The actions can be prioritized according to the specific capabilities of the vehicle (equipment, options). User interface actions and proposed mitigation measures can be broadcast to the vehicle via CAN Bus.

The platform can be responsible to put the proposed measures into action, based on the broadcast message.

The response/user interface module is the most subject to adaptation to the specific platform, all other modules being more generic in nature.

The BlackBox Logging is a memory storage module which can provide a memory storage function to store data which can be used later such as by replaying a video for example. To this end, it can have a flash memory storage for instance.

The video data that travels within the control modules are based on first in -first out and any past events can be stored in flash memory up to 1 minute or more and all the previous data are dumped out from SRAM and flash memory. In case of an accident or collision or if the airbag activates, the one minute of stored data on flash memory can be automatically saved to the black box login to be retrieved and replayed later. Other data can also be automatically stored into the black box in certain conditions, such as distance history with vehicle in front, vehicle position history relative to lane marking, curb and/or barrier, time of impact, etc.

The storage can used to store, continuously, and for a certain time window, data such as : video fusion imaging, sound (using a microphone), external variables, threat identifications, actions suggested, etc.. In the case of a major event such as: airbag deploys, shock detection, heavy vibrations, engine cut off, door opens while in motion, etc, the blackbox logging can continue, while being switched to a separate memory area. This method will allow for more than a single blackbox event log to be preserved, in case of a "chain" of events.

A subsystem can be dedicated to acquiring the pertinent platform variables from the CAN BUS. Expected data can include : Speed, Steering direction, Turn lights signals, Engine Status, Doors open/Close, Daylights, Hi-Beams, Low-beams, Airbag deployment, etc. The data can be logged to the BlackBox, and be made available to other modules in the control modules system.

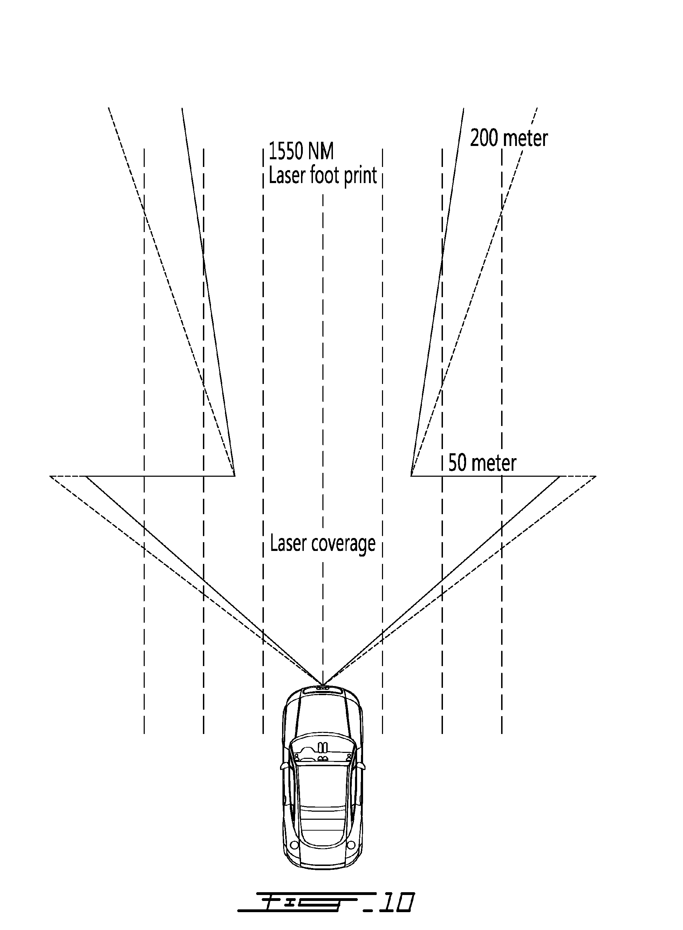

Finally, Fig. 10 shows a proposed diffusion pattern for an emitted laser of the LIDAR.

Another aspect of the invention relates to a control module comprising a video signal acquirer, a video processor for processing the acquired video signal, a threat analyzer capable of detecting a threat from the processed video signal or from another source, and a memory storage device. The control module may further comprise a common housing in which each of the video signal acquirer, the video processor, the threat analyser and the memory storage device are mounted.

The control module may be arranged for storing a predetermined amount of recent history data from the video signal acquirer. The recent history data may be stored into the memory storage device upon detection of a threat.

The control module may further comprise a sound recorder system including a microphone, an audio output for audio data acquired via the microphone, and an audio memory storing a predetermined amount of recent history data from the audio data; wherein the recent history data is stored into the memory storage device upon detection of a threat.

The video signal may include combined arrayed data having a number of combined pixels, wherein each combined pixel has at least red (R), green (G), blue (B), and depth (D) data.

The control module may have at least one of relative vehicle position, velocity data, and time of impact data which can be automatically stored into the memory storage device upon detection of a threat.

As can be from the discussion above and the various embodiments presented, the examples described above and illustrated are intended to be exemplary only. The scope is indicated by the appended claims.

## Claims

1. An image acquisition unit comprising :
a housing,
a video camera system including at least one video camera and a video output for video arrayed data acquired via the at least one video camera,
a lidar system including at least one lidar emitter and a lidar receiver, and a lidar output for lidar arrayed data acquired from the lidar receiver,
a fusion integrator connected to both the video output and the lidar output for receiving both the video arrayed data and the lidar arrayed data, the fusion integrator having a co-registering function to co-register the video arrayed data and the lidar arrayed data into a combined arrayed data, and
an output for the combined arrayed data leading out of the housing.

2. The image acquisition unit of claim 1 wherein the video camera system includes a CMOS and a camera controller.

3. The image acquisition unit of claim 1 or 2 wherein the lidar system includes a pulse generator, a range/intensity acquirer, and an intensity/depth array constructor.

4. The image acquisition unit of claim 3 wherein the pulse generator includes a coder, further comprising a pulse code validator acting as a gate between the range/intensity acquirer and the intensity/depth constructor for rejecting acquired range/intensity data if the pulse code is not validated.

5. The image acquisition unit of any one of claims 1 to 4 wherein the video camera is one of a wide angle camera and a telephoto/zoom camera, and the video camera system further includes the other one of a wide angle camera and a telephoto/zoom camera.

6. The image acquisition unit of any one of claims 1 to 5 wherein the lidar system includes at least two laser emitters coupled by co-alignment optics.

7. The image acquisition unit of any one of claims 1 to 6 wherein all of the video camera system, the lidar system, and the fusion integrator have electronics part of a common FPGA.

8. A method comprising:
acquiring video arrayed data from at least one video camera;
acquiring lidar arrayed data from the reflected lidar signal received; and
co-registering the video arrayed data with the lidar arrayed data into a combined arrayed data signal.

9. The method of claim 8, wherein the video arrayed data has a 2D array of a given number of video pixels, each video pixel having red (R), green (G) and blue (B) data; the lidar arrayed data has a 2D array of a given number of lidar pixels, each lidar pixel having intensity (I) and depth (D) data; and the combined arrayed data has a number of combined pixels, each combined pixel having red (R), green (G), blue (B), intensity (I) and depth (D) data.

10. The method of claim 9 wherein the number of video pixel is greater than the number of lidar pixels, wherein said co-registering includes associating the intensity (I) and depth (D) data of each lidar pixel to the red (R), green (G) and blue (B) data of more than one of said video pixels.

11. The method of any one of claims 8 to 10 wherein said acquiring lidar arrayed data includes emitting a lidar signal and receiving a reflected lidar signal.

12. The method of claim 11 wherein said emitting a lidar signal includes obtaining a given pattern and emitting a lidar signal based on the given pattern in a repetitive manner; wherein said receiving further comprises comparing the reflected lidar signal to said given pattern and rejecting said reflected lidar signal if the reflected lidar signal does not match the given pattern.

13. The method of claim 12 further comprising monitoring a number of successive rejected reflected lidar signals, and changing the given pattern to another pattern upon determining that the number of successive rejected reflected lidar signals has reached a predetermined threshold.

14. The method of claim 12 or 13 wherein the given pattern is selected from a given number of patterns.

15. The method of any one of claims 8 to 14 further comprising providing the combined arrayed data signal to control modules of an automotive vehicle for analysis.
